# EUROPÄISCHE PATENTSCHRIFT

(11) **EP 2 647 682 B1**
(45) Veröffentlichungstag und Bekanntmachung des Hinweises auf die Patenterteilung: **12.08.2015**
(21) Anmeldenummer: 13153790.4
(22) Anmeldetag: 04.02.2013
(51) Int. Cl.: C09J 7/00, C09J 7/02, C09J 199/00, C09J 167/04

(54) **Biologisch abbaubarer Haftklebstoff**
Biodegradable adhesive agent
Adhésif biodégradable

(30) Priorität: 24.02.2012 DE 102012202822
(43) Veröffentlichungstag der Anmeldung: 09.10.2013
(73) Patentinhaber: tesa SE, 20253 Hamburg (DE)
(72) Erfinder: Schümann, Uwe, Dr., 25421 Pinneberg (DE); Spies, Manfred, Dr., 24576 Bad Bramstedt (DE); Ihrig, Ralf, 25451 Quickborn (DE)

(56) Entgegenhaltungen:
- WO-A1-94/10257
- DATABASE WPI Week 200026 Thomson Scientific, London, GB; AN 2000-298669 XP002712043, & JP 2000 086877 A (SHIMADZU CORP) 28. März 2000 (2000-03-28)

## Beschreibung

Die Erfindung betrifft die Verwendung eines biologisch abbaubaren Haftklebstoffs auf Basis von Polymilchsäure.

Haftklebemassen sind seit langem bekannt. Als Haftklebemassen werden Klebemassen bezeichnet, die bereits unter relativ schwachem Andruck eine dauerhafte Verbindung mit dem Haftgrund erlauben und nach Gebrauch im Wesentlichen rückstandsfrei vom Haftgrund wieder abgelöst werden können. Haftklebemassen wirken bei Raumtemperatur permanent haftklebrig, weisen also eine hinreichend geringe Viskosität und eine hohe Anfassklebrigkeit auf, so dass sie die Oberfläche des jeweiligen Klebegrunds bereits bei geringem Andruck benetzen. Die Verklebbarkeit der Klebemassen und die Wiederablösbarkeit beruht auf ihren adhäsiven Eigenschaften und auf ihren kohäsiven Eigenschaften. Als Basis für Haftklebemassen kommen verschiedene Verbindungen in Frage.

Klebebänder, die mit Haftklebemassen ausgerüstet sind, so genannte Haftklebebänder, werden heute im industriellen und privaten Bereich in vielfältiger Weise verwendet. Üblicherweise bestehen Haftklebebänder aus einer Trägerfolie, die ein- oder beidseitig mit einer Haftklebmasse ausgerüstet ist. Es gibt auch Haftklebebänder, die ausschließlich aus einer Haftklebmasseschicht und keiner Trägerfolie bestehen, die so genannten Transfer-Tapes. Die Zusammensetzung der Haftklebebänder kann sehr unterschiedlich sein und richtet sich nach den jeweiligen Anforderungen der unterschiedlichen Anwendungen. Die Träger bestehen üblicherweise aus Kunststofffolien wie zum Beispiel Polypropylen, Polyethylen, Polyester oder auch aus Papier, Gewebe oder Vliesstoff.

Die Selbst- beziehungsweise Haftklebemassen bestehen üblicherweise aus Acrylat-Copolymeren, Silikonen, Naturkautschuk, Synthesekautschuk, Styrolblockcopolymeren oder Polyurethanen.

Aufgrund von ökologischen Gesichtspunkten, Nachhaltigkeit und vor dem Hintergrund der immer knapper werdenden Ressourcen an Erdöl und auf der anderen Seite eines weltweit stark wachsenden Verbrauches an Kunststoffen gibt es seit einigen Jahren die Bestrebung, Kunststoffe auf Basis von nachwachsenden Rohstoffen herzustellen. Dies gilt insbesondere für biologisch abbaubare Polymere, die in Verpackungsanwendungen oder Folienanwendungen Verwendung finden sollen. Auch für medizinische Anwendungen spielen biologisch abbaubare Produkte eine zunehmend wichtige Rolle. Einige biobasierte beziehungsweise bioabbaubare Kunststoffe sind heute kommerziell verfügbar.
Biobasiert heißt, hergestellt aus nachwachsenden Rohstoffen. Bioabbaubare Polymere ist eine Bezeichnung für natürliche und synthetische Polymere, die Kunststoff ähnliche Eigenschaften (Kerbschlagzähigkeit, Thermoplastifizierbarkeit) aufweisen, aber im Gegensatz zu konventionellen Kunststoffen von einer Vielzahl von Mikroorganismen in biologisch aktiver Umgebung (Kompost, Faulschlamm, Erde, Abwasser) abgebaut werden; dies passiert nicht notwendigerweise unter üblichen Haushaltsbedingungen (Kompostierung im Garten). Eine Definition der Bioabbaubarkeit findet sich in den Europäischen Normen DIN EN 13432 (biologischer Abbau von Verpackungen) und DIN EN 14995 (Kompostierbarkeit von Kunststoffen).

Aufgrund der Tatsache, dass ökologische Aspekte, die die biologische Abbaubarkeit betreffen, auch für Haftklebebänder eine immer wichtigere Rolle spielen, wurden in der Vergangenheit auch Haftklebebänder vorgestellt, die als Trägermaterial biologisch abbaubare Folien verwenden. Die verwendeten Folien basieren häufig auf Polymilchsäurecompounds. Polymilchsäure ist ebenso wie weitere biologisch abbaubare und für die Anwendung in Frage kommende thermoplastische Polymere relativ hart und spröde. Um für Folienanwendungen geeignet zu sein, müssen diese in Betracht kommenden biologisch abbaubaren Polymere mit weicheren Polymeren compoundiert werden, die häufig nicht oder schlechter biologisch abbaubar sind.

Hinsichtlich der Haftklebemassen sind die Möglichkeiten weiter eingeschränkt. Haftklebemassen sind amorphe Materialien mit niedrigem Glasübergangspunkt.

Die klassischen Gerüstpolymere wie Naturkautschuk, Styrolblockcopolymere oder Polyacrylate sind gemäß den in Europa zugrunde liegenden Normen wie zum Beispiel der DIN EN 13432 nicht biologisch abbaubar. Gleiches gilt für die übliche Tackifierharze wie Kolophoniumderivate, Kohlenwasserstoffharze oder Terpenphenolharze. Siliconhaftklebemassen scheiden aufgrund ihrer hervorragenden Alterungsstabilität gänzlich aus. Kriterium für eine biologische Abbaubarkeit ist üblicherweise das Vorhandensein von Heteroatomen in der Kohlenstoffhauptkette. Eine chemische Bindung zwischen einem Kohlenstoffatom und einem Heteroatom wie zum Beispiel Sauerstoff oder Stickstoff ist instabiler und damit einem biologischen Abbau leichter zugänglich als eine Bindung zwischen zwei Kohlenstoffatomen.

Aufgrund dieser Gegebenheiten bieten sich Polyesterhaftklebemassen für entsprechende Anwendungen an. Polyesterhaftklebemassen haben häufig den Nachteil, dass die Anfassklebkraft dieser Klebesysteme sich auf einem relativ niedrigen Niveau befindet. Der Zusatz von üblichen verträglichen Tackifiern wie zum Beispiel Klebharzen würde hier zwar einerseits für Abhilfe sorgen, andererseits aber auf Kosten einer schlechteren biologischen Abbaubarkeit gehen.

In JP 2007 070 422 A1 wird ein biologisch abbaubarer Haftklebstoff auf Basis eines Polyesterpolyurethans beschrieben, der aber den Nachteil hat, schmelzfähig zu sein. Mit schmelzfähigen Haftklebstoffen sind prinzipiell keine guten Verklebungsfestigkeiten bei höheren Temperaturen erzielbar.

Polymilchsäuren oder Polylactide (kurz PLA) sind Polyester auf Basis von Milchsäure, aus deren Lactid sie durch Ringöffnungspolymerisation hergestellt werden können. Polymilchsäuren sind thermoplastische Kunststoffe, die aus Milchsäuremolekülen aufgebaut sind. Lactide sind natürlichen Ursprungs und lassen sich durch Vergärung von Melasse oder durch Fermentation von Glucose mit Hilfe von verschiedenen Bakterien herstellen. Das Polymer als Polyhydroxycarbönsäure ist vollständig kompostierbar und biologisch abbaubar. Abbauprodukte sind Wasser und Kohlendioxid. Die thermische Stabilität und die mechanischen Eigenschaften lassen sich durch Compoundierung mit anderen Polymeren wie zum Beispiel Polyolefinen in weiten Bereichen verändern, wobei die Kompostierbarkeit und die biologische Abbaubarkeit mit zunehmenden Gehalt an nicht kompostierbar und biologisch abbaubaren Additiven reduziert wird.

Polymilchsäure wird als resorbierbares chirurgisches Nahtmaterial und als Verkapselungsmaterial für Pharmaka eingesetzt. Copolymere auf Basis L-Milchsäure sind biologisch abbaubare orthopädische Reparaturmaterialien für zum Beispiel Knochenreparaturen.
Die Herstellung und Verwendung von Polymilchsäurefolien für den Bereich der Verpackung, des Landwirtschafts- und Gartenbaus und der Medizintechnik ist hinreichend bekannt.

Aufgabe der Erfindung ist es, hier Abhilfe zu schaffen und eine Möglichkeit aufzuzeigen, mit der Haftklebstoffe für technische Anwendungen zugänglich sind, die das Eigenschaftsprofil von üblichen Haftklebstoffen zeigen und die biologisch abbaubar sind.

Gelöst wird diese Aufgabe durch die Verwendung einer Haftklebemassein einem Klebeband, wie sie im Hauptanspruch niedergelegt ist. Gegenstand der Unteransprüche sind vorteilhafte Fortbildungen des Erfindungsgegenstandes.

Demgemäß betrifft die Erfindung die Verwendung einer biologisch abbaubaren Haftklebemasse in einem ein- oder beidseitig klebenden Klebeband, wobei die Haftklebemasse aus amorphem Polylactid besteht.
Reine Polylactide sind kristalline Stoffe mit hohem Tg und daher als Gerüstpolymer für Haftklebemassen unbrauchbar. Das Verhältnis kristallin/amorph lässt sich bei reinen Polylactiden durch die Zusammensetzung der betreffenden Stereoisomeren in gewissen Grenzen beeinflussen. Um den Glasübergangspunkt in einen Bereich abzusenken, der für haftklebrige Systeme interessant ist, ist die Modifizierung durch Copolymerisation notwendig. Geeignete Comonomere können zum Beispiel Copolyester auf Basis von Polylactid, Adipinsäure und Hexandiolen sein, ohne die Möglichkeit der Modifizierung des Polylactids einschränken zu wollen. Des Weiteren können auch Mischungen der aufgeführten Comonomere eingesetzt werden.

In einer vorteilhaften Ausführungsform weist die Haftklebemasse die folgende Zusammensetzung auf:

| | |
|---|---|
| Amorphes Polylactid Vyloecol BE-910 | 100 Gew.-% |

Bei Vyloecol BE-910 handelt es sich um Copolymer mit 60 Gew.-% PLA und 40 Gew.-% weiterer Comonomere wie Adipinsäure und 1,6 Hexandiol. Bevorzugt sind Ausführungsformen der Erfindung aus einem Copolymer mit 60 Gew.-% PLA und 40 Gew.-% der Comonomere Adipinsäure und Hexandiol, wobei deren Anteil annähernd gleich groß ist beziehungsweise wobei der Anteil an Adipinsäure den von Hexandiol zwischen 4 und 7 Gew.-% übertrifft.

Vyloecol BE-910 weist folgende Eigenschaften auf:
- Molekulargewicht M_{w} = 25*10³ g/mol
- Dichte von 1,18 g/cm³
- Glasübergangspunkt T_{g} = -10 °C
- Hydroxylgruppenwert 11 KOHmg/g

Die Kohäsion bezeichnet den durch echte chemische Bindung oder zwischenmolekulare Kräfte verursachten Zusammenhalt der Stoffe. Die Kohäsion lässt sich als ein Sonderfall der Adhäsion auffassen, bei dem gleichartige Teilchen aneinanderhaften. Sind die Adhäsionskräfte hauptsächlich in den Grenzflächen wirksam und vorwiegend nach außen gerichtet, so sind Kohäsionskräfte im Innern der Stoffe wirksam. Die Kohäsion ist in Festkörpern größer als in Flüssigkeiten und viel größer als zwischen den Atomen beziehungsweise Molekülen in Gasen; sie bewirkt die Festigkeit der Festkörper, die innere Festigkeit der Klebstoffe und die Spaltbarkeit der Kristalle.
Im Falle von Beschichtungen ist mit Kohäsion der Zusammenhalt innerhalb der einzelnen Schichten gemeint. Mangelnde Kohäsion kann bei mechanischer Belastung zur Enthaftung innerhalb einer Schicht, dem Kohäsionsbruch führen.

Falls gewünscht wird, die Kohäsion zu steigern, kann dies durch eine Vernetzung der Polylactidmatrix erfolgen.
Eine solche Vernetzung kann entweder chemisch über zugesetzte Vernetzungsagentien oder auch physikalisch, zum Beispiel durch Elektronenstrahlhärtung (bei üblicherweise 30 bis 50 kGy) oder UV-Strahlung durchgeführt werden.
Die chemische Vernetzung erfolgt dabei vorzugsweise durch zugesetzte Vernetzer (zum Beispiel Isocyanate) oder aber durch andere chemische Vernetzungsagenzien (zum Beispiel Chelate Hydrazide, Nitrene, Schwefelverbindungen, etc.).

Eine hohe Vernetzungsdichte führt zu einer Klebemasse mit einer hohen Kohäsion, die gleichzeitig vergleichsweise geringe Klebkräfte aufweist. Damit ist die Klebemasse auf der anderen Seite reversibel wieder vom Untergrund ablösbar.
Hohe Vernetzungsdichten lassen sich an üblichen ESH-Anlagen erzeugen, wenn - für eine beispielhafte Beschleunigungsspannung von 100 kV - Werte innerhalb des folgenden Parameterraumes eingestellt werden:
- Strahlendosis zwischen 10, bis 100 kGy, vorzugsweise 30 bis 70 kGy
- Auftragsgewicht der Klebemasse zwischen 10 und 100 g/m²
- Bahngeschwindigkeit zwischen 10 und 400 m/min

Die angegebenen Parameterbereiche sind dabei nur beispielhaft zu sehen. Dem Fachmann im Bereich von Klebemassen und Klebebändern ist bekannt, welche Werte er wählen muss, um die gewünschte Vernetzungsdichte einzustellen, ohne dass es einer erfinderischen Tätigkeit bedarf oder ohne dass dies mit einem unzumutbaren Aufwand verbunden wäre.

Je nach Anforderungsprofil kann es vorteilhaft sein, die Haftklebemasse nicht zu vernetzen, weder chemisch über zugesetzte Vernetzungsagentien noch physikalisch.

Für die Herstellung eines biologisch abbaubaren Haftklebebandes ist ein biologisch abbaubarer Papierträger oder eine Folie aus einem biologisch abbaubaren Polymeren zu verwenden.

Als Trägermaterialien kommen grundsätzlich aber auch alle dem Fachmann geläufigen und üblichen weiteren Trägermaterialien wie vorbehandelte Papiere, Gewebe, Vlies oder Folien aus zum Beispiel Polyester wie Polyethylenterephthalat (PET), Polyethylen, Polypropylen, verstreckten Polypropylen, Polyvinylchlorid, in Betracht.

Besonders bevorzugt werden Trägermaterialien aus nachwachsenden Rohstoffen wie Papier, Gewebe aus zum Beispiel Baumwolle, Hanf, Jurte, Brennesselfasern oder Folien aus zum Beispiel Polymilchsäure, Cellulose, modifizierter Stärke, Polyhydroxyalkanoat, biobasiertem Polypropylen oder biobasiertem Polyethylen. Diese Aufzählung ist nicht abschließend zu verstehen, sondern im Rahmen der Erfindung ist auch die Verwendung anderer Folien möglich.
Das Trägermaterial kann vorzugsweise ein- oder beidseitig mit der Haftklebemasse ausgerüstet sein.
Das Haftklebeband wird dadurch gebildet, dass auf den Träger partiell oder vollflächig die Klebemasse aufgetragen wird. Die Beschichtung kann auch in Form eines oder mehrerer Streifen in Längsrichtung (Maschinenrichtung) erfolgen, gegebenenfalls in Querrichtung, sie ist insbesondere aber vollflächig. Weiterhin kann die Klebemassen rasterpunktförmig mittels Siebdruck, wobei die Klebstoffpünktchen auch unterschiedlich groß und/oder unterschiedlich verteilt sein können, durch Tiefdruck in Längs- und Querrichtung zusammenhängenden Stegen, durch Rasterdruck oder durch Flexodruck aufgebracht werden. Die Klebemasse kann in Kalottenform (hergestellt durch Siebdruck) vorliegen oder auch in einem anderen Muster wie Gitter, Streifen, Zickzacklinien. Ferner kann sie beispielsweise auch aufgesprüht sein, was ein mehr oder weniger unregelmäßiges Auftragsbild ergibt.

Der Masseauftrag (Beschichtungsstärke) der Klebemasse liegt vorzugsweise zwischen 10 und 200 g/m², weiter vorzugsweise zwischen 25 und 75 g/m², ganz besonders vorzugsweise zwischen 30 und 50 g/m².

Vorteilhaft für die Verankerung der Haftklebemasse auf dem Trägermaterial ist eine Vorbehandlung des Trägermaterials via Corona oder Ätzprozess oder die Verwendung eines Haftvermittlers, einer so genannten Primerschicht, zwischen Trägerfolie und Klebmasse.
Besonders bevorzugt wird das Trägermaterial coronabehandelt.

Als Primer sind grundsätzlich die bekannten Dispersion- und Lösungsmittelsysteme verwendbar zum Beispiel auf Basis von Isopren- oder Butadien haltigen Kautschuk, Acrylatkautschuk, Polyvinyl, Polyvinyliden und/oder Cyclokautschuk, wobei die biologische Abbaubarkeit der Primerschicht in Abhängigkeit der Anwendung separat betrachtet werden muss. Isocyanate oder Epoxyharze als Additive verbessern die Haftung und erhöhen zum Teil auch die Scherfestigkeit des Haftklebstoffes. Der Haftvermittler kann ebenfalls mittels einer Coextrusionsschicht auf die Trägerfolie aufgebracht werden. Als physikalische Oberflächenbehandlungen eigenen sich zum Beispiel Beflammung, Corona oder Plasma oder Coextrusionsschichten.

Des Weiteren kann das Trägermaterial rück- oder oberseitig, also der Klebemassenseite gegenüberliegend, einer antiadhäsiven physikalischen Behandlung oder Beschichtung unterzogen sein, insbesondere mit einem Trennmittel oder Release (gegebenenfalls mit anderen Polymeren abgemischt) ausgerüstet sein.
Beispiele sind Stearyl-Verbindungen (zum Beispiel Polyvinylstearylcarbamat, Stearylverbindungen von Übergangsmetallen wie Cr oder Zr, Harnstoffe aus Polyethylenimin und Stearylisocyanat oder Polysiloxane. Der Begriff Stearyl steht als Synonym für alle geraden oder verzweigten Alkyle oder Alkenyle mit einer C-Zahl von mindestens 10 wie zum Beispiel Octadecyl.
Geeignete Trennmittel umfassen weiterhin tensidische Releasesysteme auf Basis langkettiger Alkylgruppen wie Stearylsulfosuccinate oder Stearylsulfosuccinamate, aber auch Polymere, die ausgewählt sein können aus der Gruppe bestehend aus Polyvinylstearylcarbamaten wie zum Beispiel Escoat 20 von der Firma Mayzo, Polyethyleniminstearylcarbamiden, Chrom-Komplexen von C₁₄- bis C₂₈-Fettsäuren und Stearyl-Copolymeren, wie zum Beispiel in DE 28 45 541 A beschrieben. Ebenfalls geeignet sind Trennmittel auf Basis von Acrylpolymeren mit perfluorierten Alkylgruppen, Silikone zum Beispiel auf Basis von Poly(dimethyl-Siloxanen) oder Fluorsilikonverbindungen.

Die genannten Primer und Trennmittel sind zumeist nicht biologisch abbaubar. Deren Anteil am Klebeband ist allerdings dermaßen gering, Dass das Produkt insgesamt noch las abbaubar eingestuft wird.

Weiter kann das Trägermaterial vor- beziehungsweise nachbehandelt werden. Gängige Vorbehandlungen sind Hydrophobieren, geläufige Nachbehandlungen sind Kalandern, Tempern, Kaschieren, Stanzen und Eindecken.

Das Haftklebeband kann ebenfalls mit einer handelsüblichen Trennfolie oder -papier, die üblicherweise aus einem Basismaterial aus Polyethylen, Polypropylen, Polyester oder Papier das ein- oder doppelseitig mit Polysiloxan beschichtet ist, laminiert sein.

Die Herstellung des erfindungsgemäßen Haftklebefilms kann durch übliche, dem Fachmann bekannte Beschichtungsverfahren erfolgen. Hierbei kann die Haftklebmasse gelöst in einem geeigneten Lösemittel, mittels beispielsweise Rasterwalzenauftrag, Kommarakelbeschichtung, Mehrwalzenbeschichtung oder in einem Druckverfahren auf eine Trägerfolie oder Trennfolie beschichtet und anschließend das Lösemittel in einem Trockenkanal oder -ofen entfernt werden.

Das erfindungsgemäße Haftklebeband hat vorzugsweise eine Klebkraft auf einem Stahluntergrund von mindestens 1,0 N/cm und eine Scherdeformation von maximal 500 µm bei einem Masseauftrag von 50 g/m². Diese Werte werden auch nach einer Lagerung von 3 Monaten bei 23 °C, 40 °C oder 70 °C erreicht.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte, Stanzlinge, Etiketten und dergleichen.
Das Klebeband kann in festen Längen wie zum Beispiel als Meterware oder aber als Endlosware auf Rollen (archimedische Spirale) zur Verfügung gestellt werden.
Das Klebeband kann nur aus einer Schicht Klebemasse bestehen, also einlagig sein, das Klebeband kann aber auch einen Träger aufweisen, auf den ein- oder beidseitig eine Schicht (oder gegebenenfalls mehrere Schichten) Klebemasse aufgebracht ist.

Der Gesamtgehalt an nachwachsenden Rohstoffen im erfindungsgemäßen Haftklebeband bestehend aus Trägerfolie, Klebmasse und optional einem Trennpapier beträgt vorzugsweise mindestens 20 Gew.-%, weiter vorzugsweise mindestens 40 Gew.-%.

Eine biologische Abbaubarkeit der erfindungsgemäßen Haftklebemasse im wässrigen Medium und eine Desintegration in einem standardisierten Kompost sind gegeben.

Weitere Einzelheiten, Ziele, Merkmale und Vorteile der vorliegenden Erfindung werden nachfolgend anhand bevorzugter Ausführungsbeispiele näher erläutert, ohne damit in irgendeiner Weise die Erfindung einschränken zu wollen. In der Zeichnung zeigt
- Figur 1: ein einseitiges Haftklebeband,
- Figur 2: ein beidseitiges Haftklebeband,
- Figur 3: ein trägerfreies Haftklebeband (Transferklebeband).

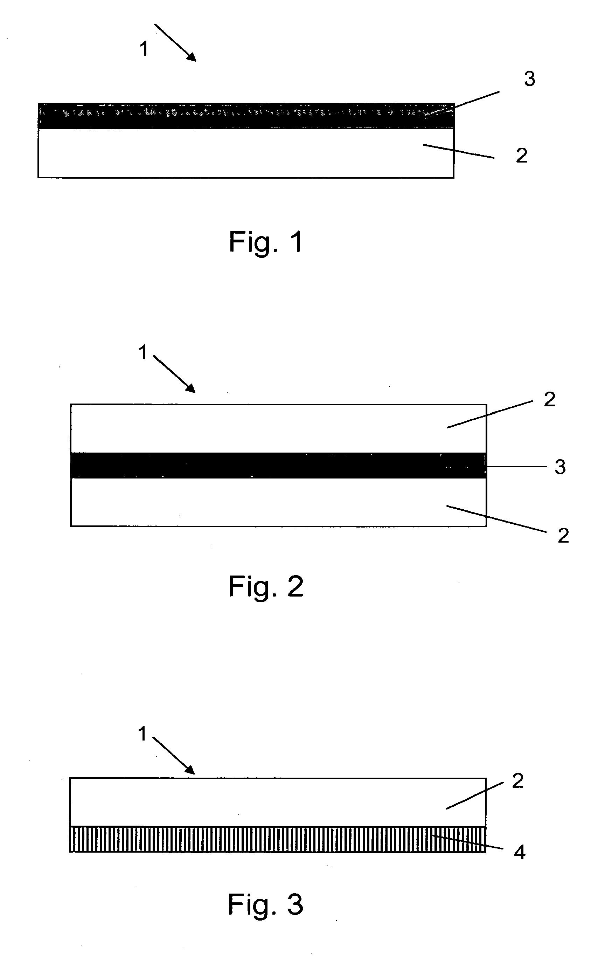

Figur 1 zeigt ein einseitig klebendes Haftklebeband 1. Das Haftklebeband 1 weist eine Klebeschicht 2 auf, die durch Beschichtung einer der zuvor beschriebenen Haftklebemasse auf einen Träger 3 hergestellt wurde. Der Haftklebemassenauftrag beträgt bevorzugt zwischen 10 und 200 g/m².

Zusätzlich (nicht gezeigt) kann noch eine Trennfolie vorgesehen sein, die die Klebeschicht 2 vor der Verwendung des Haftklebebandes 1 abdeckt und schützt. Die Trennfolie wird dann vor der Verwendung von der Klebeschicht 2 entfernt.

Der in Figur 2 dargestellte Produktaufbau zeigt ein Haftklebeband 1 mit einem Träger 3, der beidseitig mit einer Haftklebemasse beschichtet ist und somit zwei Klebeschichten 2 aufweist. Der Haftklebemassenauftrag je Seite beträgt wiederum bevorzugt zwischen 10 und 200 g/m².

Auch bei dieser Ausgestaltung wird bevorzugt zumindest eine Klebeschicht 2 mit einer Trennfolie abgedeckt. Bei einem aufgerollten Klebeband kann diese eine Trennfolie gegebenenfalls auch die zweite Klebeschicht 2 abdecken. Es können aber auch mehrere Trennfolien vorgesehen sein.

Des Weiteren ist es möglich, dass die Trägerfolie mit einer oder mehreren Beschichtungen versehen ist. Weiterhin kann auch nur eine Seite des Haftklebebandes mit der Haftklebemasse ausgestattet sein und auf der anderen Seite eine andere Haftklebemasse eingesetzt werden.

Der in Figur 3 dargestellte Produktaufbau zeigt ein Haftklebeband 1 in Form eines Transferklebebandes, das heißt, ein trägerfreies Haftklebeband 1. Hierzu wird die Haftklebemasse einseitig auf eine Trennfolie 4 beschichtet und bildet so eine Haftklebeschicht 2 aus. Der Haftklebemassenauftrag beträgt hier üblicherweise zwischen 10 und 200 g/m². Gegebenenfalls wird diese Haftklebeschicht 2 noch auf ihrer zweiten Seite mit einer weiteren Trennfolie abgedeckt. Zur Verwendung des Haftklebebandes werden dann die Trennfolien entfernt.

Als Alternative zu Trennfolien können beispielsweise auch Trennpapiere oder dergleichen eingesetzt werden. In diesem Fall sollte die Oberflächenrauigkeit des Trennpapiers aber reduziert sein, um eine möglichst glatte Haftklebemassenseite zu realisieren.

### Prüfmethoden

Die Messungen werden, wenn nicht anders angegeben, bei einem Prüfklima von 23 ± 1 °C und 50 ± 5 % rel. Luftfeuchte durchgeführt.

### Bestimmung Kompostierbarkeit//Biologische Abbaubarkeit

Die Prüfung der Kompostierbarkeit//Biologische Abbaubarkeit erfolgt gem. europäischer Norm EN 13432.

### Bestimmung des Anteils an nachwachsenden Rohstoffen

Der Anteil an nachwachsenden Rohstoffen wird gemäß der C14-Radiocarbonmethode ASTM D6866-04 bestimmt. Alternativ kann die Bestimmung auch rechnerisch auf Basis von Herstellerangeben der Rohstoffe erfolgen.

### Klebkraft

Die Prüfung der Schälfestigkeit (Klebkraft) erfolgte in Anlehnung an PSTC-1. Ein 2 cm breiter Streifen des Haftklebebandes wird auf dem Prüfuntergrund wie zum Beispiel einer Stahlplatte durch fünfmaliges doppeltes Überrollen mittels einer 5 kg Rolle verklebt. Die Platte wird eingespannt, und der Selbstklebestreifen über sein freies Ende an einer Zugprüfmaschine unter einem Schälwinkel von 180° mit einer Geschwindigkeit von 300 mm/min abgezogen, und die dafür notwendige Kraft ermittelt. Die Messergebnisse sind in N/cm angegeben und über drei Messungen gemittelt.

### Scherstandzeit (Holding- Power, HP)

Die Scherstandzeit gibt die Verklebungsfestigkeit für eine parallel zum verklebten Band angreifende Belastungskraft an. Sie ist die Zeit, die bis zum völligen Abscheren eines belasteten Klebebandes von einer Stahlplatte gemessen wird.
Zur Bestimmung der HP- Werte wird ein 19 mm breiter Prüfstreifen so auf ein vorbehandeltes Stahlplättchen geklebt, dass eine Verklebungsfläche von 19x20 mm² entsteht. An das überstehende Ende des Klebebandes wird mit Hilfe einer Klammer ein I-kg-Gewicht gehängt, so dass eine senkrechte Zugkraft von 5,15 N pro 1 cm Bandbreite übertragen wird.
Die Einheit der Scherstandzeit ist Minuten. Steht vor den Werten ein ">"-Zeichen, bedeutet das, dass die Messungen nach dieser Zeit abgebrochen wurden, da noch keinerlei Scheren zu erkennen war. "(K)" bedeutet Kohäsionsbruch mit Masserückständen, "(A)" ist die Abkürzung für Adhäsionsbruch.

### Tack

Der Tack wurde nach der Rolling Ball Methode bestimmt, bei der eine Stahlkugel mit einem Durchmesser von 11 mm von einer 65 mm hohen Rampe auf die Masseseite des Klebebandes rollt. Die zurückgelegte Wegstrecke ist ein Maß für die Anfassklebrigkeit. Je geringer dieser Wert ist, desto höher ist der Tack.

### Statische Glasübergangstemperatur

Die Bestimmung der statischen Glasübergangstemperatur erfolgt über Dynamische Differenzkalorimetrie nach DIN 53765. Die Angaben zur Glasübergangstemperatur Tg beziehen sich auf den Glasumwandlungstemperatur-Wert Tg nach DIN 53765:1994-03, sofern im Einzelfall nichts anderes angegeben ist.
Im Folgenden soll die Erfindung anhand mehrerer Beispiele näher erläutert werden, ohne damit die Erfindung unnötig einschränken zu wollen.

### Molekulargewicht M_{w}

Das gewichtsmittlere Molekulargewicht M_{w} wird dabei mittels Gelpermeationschromatographie (GPC) bestimmt. Als Eluent wird THF mit 0,1 Vol.-% Trifluoressigsäure eingesetzt. Die Messung erfolgt bei 25 °C. Als Vorsäule wird PSS-SDV, 5 p, 10³ A, ID 8,0 mm x 50 mm verwendet. Zur Auftrennung werden die Säulen PSS-SDV, 5 p, 10³ sowie 10⁵ und 10⁶ mit jeweils ID 8,0 mm x 300 mm eingesetzt. Die Probenkonzentration beträgt 4 g/l, die Durchflussmenge 1,0 ml pro Minute. Es wird gegen PMMA Standards gemessen. (µ = µm; 1 A = 10⁻¹⁰ m).

### Beispiele

### Beispiel 1

30 g des amorph eingestellten Polylactids BE-910 der Firma Toyobo (Tg=-10 °C) und 70 g Tetrahydrofuran wurden in ein Schraubdeckelglas eingewogen. Das Glas wurde mit einem Deckel verschlossen und anschließend auf eine Rollbank gegeben und für 24 Stunden homogenisiert, so dass sich eine klare Lösung gebildet hatte. Die so erhaltene Lösung wurde anschließend mit Hilfe einer Labor-Beschichtungsanlage mit Streichbalken auf eine 35 µm dicke coronavorbehandelte PLA-Folie mit einem Masseauftrag von 50 g/m² beschichtet. Das so erhaltene Material wurde für 10 Minuten bei Raumtemperatur getrocknet. Anschließend folgte eine 10-minütige Trocknung im Umlufttrockenofen bei 60 °C. Das so hergestellte Muster wurde vor Beginn der Prüfungen für 2 Tage bei Raumtemperatur gelagert.
Klebkraft Stahl: 9,3 N/cm
Scherstandzeit: 47 min
Tack: 30 cm
Prüfung Kompostierbarkeit und biologische Abbaubarkeit gem. EN 13432: Erfüllt

### Beispiel 2

30 g des amorph eingestellten Polylactids BE-910 der Firma Toyobo (Tg=-10 °C) und 70 g Tetrahydrofuran wurden in ein Schraubdeckelglas eingewogen. Das Glas wurde mit einem Deckel verschlossen und anschließend auf eine Rollbank gegeben und für 24 Stunden homogenisiert, so dass sich eine klare Lösung gebildet hatte. Die so erhaltene Lösung wurde anschließend mit Hilfe einer Labor-Beschichtungsanlage mit Streichbalken auf eine 35 µm dicke coronavorbehandelte PLA-Folie mit einem Masseauftrag von 50 g/m² beschichtet. Das so erhaltene Material wurde für 10 Minuten bei Raumtemperatur getrocknet. Anschließend folgte eine 10-minütige Trocknung im Umlufttrockenofen bei 60 °C.
Das beschichtete Material wird anschließend via Elektronenstrahl mit einer Dosis von 70 kGy (Beschleunigungsspannung 200 kV) vernetzt. Das so hergestellte Muster wurde vor Beginn der Prüfungen für 2 Tage bei Raumtemperatur gelagert.
Klebkraft Stahl: 7,8 N/cm
Scherstandzeit: 3000 min
Prüfung Kompostierbarkeit und biologische Abbaubarkeit gem. EN 13432: Erfüllt

### Vergleichsbeispiel 3

27 g des amorph eingestellten Polylactids BE-910 der Firma Toyobo (Tg=-10 °C), 2,7 g CitofolBII (Acetyltributylcitrat der Firma Jungbunzlauer) und 0,27 g Staybelite Ester 3E (Triethylenglycolester eines partiell hydrierten Rosins der Firma Eastman) und 70 g Tetrahydrofuran wurden in ein Schraubdeckelglas eingewogen. Das Glas wurde mit einem Deckel verschlossen und anschließend auf eine Rollbank gegeben und für 24 Stunden homogenisiert, so dass sich eine klare Lösung gebildet hatte. Die so erhaltene Lösung wurde anschließend mit Hilfe einer Labor-Beschichtungsanlage mit Streichbalken auf eine 35 µm dicke geätzte Polyethylenterephthalatfolie mit einem Masseauftrag von 50 g/m² beschichtet. Das so erhaltene Material wurde für 10 Minuten bei Raumtemperatur getrocknet. Anschließend folgte eine 10-minütige Trocknung im Umlufttrockenofen bei 60 °C. Das so hergestellte Muster wurde vor Beginn der Prüfungen für 2 Tage bei Raumtemperatur gelagert.
Klebkraft Stahl: 4,1 N/cm
Scherstandzeit: 10 min
Tack: 3 cm

### Vergleichsbeispiel 4

29 g des amorph eingestellten Polylactids BE-910 der Firma Toyobo (Tg=-10 °C), 1,0 g, CitofolBII (Acetyltributylcitrat der Firma Jungbunzlauer) und 0,27 g Staybelite Ester 3E (Triethylenglycolester eines partiell hydrierten Rosins der Firma Eastman) und 70 g Tetrahydrofuran wurden in ein Schraubdeckelglas eingewogen. Das Glas wurde mit einem Deckel verschlossen und anschließend auf eine Rollbank gegeben und für 24 Stunden homogenisiert, so dass sich eine klare Lösung gebildet hatte. Die so erhaltene Lösung wurde anschließend mit Hilfe einer Labor-Beschichtungsanlage mit Streichbalken auf eine silikonisierte Trennfolie mit einem Masseauftrag von 50 g/m² beschichtet. Das so erhaltene Material wurde für 15 Minuten bei Raumtemperatur getrocknet. Anschließend folgte eine 20-minütige Trocknung im Umlufttrockenofen bei 80 °C. Das so hergestellte Material wurde anschließend auf eine 35µm dicke coronavorbehandelte PLA-Folie umkaschiert. Das Muster wurde vor Beginn der Prüfungen für 2 Tage bei Raumtemperatur gelagert.
Klebkraft Stahl: 8,3 N/cm
Scherstandzeit: 22 min
Tack: 6 cm

### Vergleichsbeispiel 5

29 g des amorph eingestellten Polylactids BE-910 der Firma Toyobo (Tg=-10 °C), 1,0 g CitofolBII (Acetyltributylcitrat der Firma Jungbunzlauer) und 0,27 g Staybelite Ester 3E (Triethylenglycolester eines partiell hydrierten Rosins der Firma Eastman) und 70 g Tetrahydrofuran wurden in ein Schraubdeckelglas eingewogen. Das Glas wurde mit einem Deckel verschlossen und anschließend auf eine Rollbank gegeben und für 24 Stunden homogenisiert, so dass sich eine klare Lösung gebildet hatte. Die so erhaltene

Lösung wurde anschließend mit Hilfe einer Labor-Beschichtungsanlage mit Streichbalken auf eine silikonisierte Trennfolie mit einem Masseauftrag von 50 g/m² beschichtet. Das so erhaltene Material wurde für 15 Minuten bei Raumtemperatur getrocknet. Anschließend folgte eine 20-minütige Trocknung im Umlufttrockenofen bei 80 °C. Das so hergestellte Material wurde anschließend auf eine 50µm dicke einseitig coronavorbehandelte PLA-Folie umkaschiert, die auf der Rückseite mit einer UV-vernetzten Silikonbeschichtung ausgerüstet war (Huhtamaki, Qualität 75407). Das so erhaltene Muster wurde anschließend zu einer Rolle bewickelt. Die Rollenware wurde vor Beginn der Prüfungen für 1 Woche bei Raumtemperatur gelagert.
Klebkraft Stahl: 8,5 N/cm
Scherstandzeit: 32 min
Tack: 9 cm

## Patentansprüche

1. Verwendung einer biologisch abbaubaren Haftklebemasse in einem ein- oder beidseitig klebenden Klebeband,
**dadurch gekennzeichnet, dass**
die Haftklebemasse aus amorphem Polylactid besteht.

2. Verwendung einer Haftklebemasse nach Anspruch 1,
**dadurch gekennzeichnet, dass**
die Haftklebemasse chemisch oder physikalisch vernetzt ist.

## Claims

1. Use of a biodegradable pressure-sensitive adhesive in a single- or double-sided adhesive tape, **characterized in that** the pressure-sensitive adhesive consists of amorphous polylactide.

2. Use of a pressure-sensitive adhesive according to Claim 1, **characterized in that** the pressure-sensitive adhesive is chemically or physically crosslinked.

## Revendications

1. Utilisation d'une masse adhésive biodégradable dans un ruban à simple ou double face adhésive,
**caractérisée en ce que**
la masse adhésive se compose de polylactide amorphe.

2. Utilisation d'une masse adhésive selon la revendication 1,
**caractérisée en ce que**
la masse adhésive est réticulée chimiquement ou physiquement.
